Europäisches Patentamt

European Patent Office

Office européen des brevets

(19)

(11) Numéro de publication : **0 169 433**
**B1**

(12) **FASCICULE DE BREVET EUROPÉEN**

(45) Date de publication du fascicule du brevet :
13.12.89

(21) Numéro de dépôt : 85108475.6

(22) Date de dépôt : 09.07.85

(51) Int. Cl.⁴ : **G 11 B   7/007**, G 11 B   7/09,
G 11 B 27/30// G11B7/24

(54) **Support d'information inscriptible optiquement selon une piste définie par des motifs de prégravure et dispositif optique de suivi de piste mettant en œuvre un tel support.**

(30) Priorité : 10.07.84 FR 8410940

(43) Date de publication de la demande :
29.01.86 Bulletin 86/05

(45) Mention de la délivrance du brevet :
13.12.89 Bulletin 89/50

(84) Etats contractants désignés :
DE GB IT NL SE

(56) Documents cités :
EP–A– 0 077 641
EP–A– 0 089 263
EP–A– 0 089 264
EP–A– 0 089 274
EP–A– 0 090 690
GB–A– 2 069 219
US–A– 3 919 697
PATENTS ABSTRACTS OF JAPAN, vol. 7, no. 288 (P-228)[1373], 8 octobre 1983; & JP - A - 58 118 041 (HITACHI SEISAKUSHO K.K.) 13-07-1983
IBM TECHNICAL DISCLOSURE BULLETIN, vol. 26, no. 7B, décembre 1983, pages 3956-3957, New York, US; N.K. ARTER et al.: "Optical recording format"

(73) Titulaire : **THOMSON S.A.**
**173, bld Haussmann**
**F-75008 Paris (FR)**

(72) Inventeur : **Romeas, René**
**23, rue du Hameau des Jonchettes**
**F-91120 Palaiseau (FR)**

(74) Mandataire : **Grynwald, Albert et al**
**THOMSON-CSF SCPI**
**F-92045 PARIS LA DEFENSE CEDEX 67 (FR)**

## Description

La présente invention concerne un support d'information inscriptible optiquement selon une piste dont les éléments sont matérialisés dans une surface par des motifs de prégravure. Typiquement, un tel support d'information peut se présenter sous la forme d'un disque dont la surface photosensible est explorée par un faisceau optique selon une trajectoire en spirale dont le pas est de l'ordre du micron. Bien entendu, l'invention couvre également le cas d'une piste dont les éléments sont constitués par des cercles concentriques. La surface photosensible est explorée par un spot lumineux de dimensions très réduites qui sert à inscrire des données le long d'une spire, par exemple sous la forme d'irrégularités de surface. Pour assigner au spot inscripteur une position précise dans la surface photosensible, chaque spire est jalonnée de motifs de prégravure qui peuvent également se présenter sous la forme d'irrégularités de surface. Les motifs de prégravure découlent généralement du processus de fabrication du support d'information et à ce titre, leur implantation répond à un format particulier qui définit des zones réservées à l'inscription des données et en alternance avec celles-ci, des zones de prégravure qui se partagent l'espace disponible. Cette disposition particulière est avantageuse, car la postgravure d'un support d'information pour y loger l'information utile n'a pas d'incidence sur l'information de service contenue dans la prégravure.

On entend par information de service celle qui permet de bien situer les données le long de la piste et aussi celle qui permet d'organiser a priori à l'aide d'adresses appropriées le compartimentage du plan mémoire.

La présente invention concerne plus particulièrement la structure de prégravure qui permet au spot de lecture ou d'écriture de rester centré sur l'axe de piste et qui fournit les dates de référence permettant l'échantillonnage des signaux en tenant compte de leur rangement le long de la piste.

Dans le cas d'une exploration monospot, il est commode de prévoir une structure de prégravure comportant des motifs excentrés pour disposer d'un signal d'erreur de suivi de piste par prélèvement d'échantillons et comparaison. Une telle structure comporte en outre des motifs permettant de fixer les dates d'échantillonnage, afin que le signal d'erreur de suivi de piste ait le signe approprié pour maintenir un bon centrage du spot par rapport à la piste. Ces motifs auxiliaires peuvent être surdimensionnés par rapport au spot de lecture pour se démarquer aisément des autres motifs disponibles sur le support d'information, mais cette solution complique la réalisation de la prégravure. On est donc conduit à ne pas surdimensionner les motifs auxiliaires, mais à les distinguer par morcellement selon un code exclusif.

Une structure de prégravure comportant un agencement de motifs organisé comme indiqué ci-dessus a été décrite dans des demandes de brevets déposées en France le 12 Mars 1982, au nom de THOMSON-CSF, sous les numéros 82 04218, 82 04219, 82 04220 et 82 04221. Des structures de prégravure présentant des motifs excentrés sont également décrites dans les documents EP-A-0 077 641, EP-A-0 077 642, EP-A-0 077 643 et EP-A-0 077 644 publiées le 27 Avril 1983.

Les structures de prégravure auxquelles il est fait référence ci-dessus occupent une certaine place sur le support d'information, ce qui réduit d'autant la place disponible pour l'emmagasinage des données utiles. Dans ces structures connues, les motifs destinés à la synchronisation sont placés en tête de ceux qui sont utilisés pour assurer le suivi de piste, ce qui allonge inutilement la zone de prégravure.

Afin de pallier cet inconvénient, l'invention propose une structure de prégravure compacte mettant en œuvre des motifs qui associent entre elles les fonctions de suivi de piste et de synchronisation.

L'invention a pour objet un support d'information inscriptible optiquement selon une piste jalonnée par des zones de prégravure qui alternent avec des zones réservées à l'inscription des données utiles, chacune desdites zones de prégravure comportant au moins deux motifs ayant des bords d'attaque et de fuite, lesdits motifs permettant par leur exploration optique successive au moyen d'un spot de lecture de détecter l'erreur de suivi de piste par interaction avec au moins une partie de motif décentrée par rapport à l'axe longitudinal de ladite piste et de fournir un signal de calage de base de temps résultant de l'interaction du spot avec au moins deux bords d'attaque et deux bords de fuite, caractérisé en ce que l'un au moins desdits motifs présente ladite partie de motif décentrée associée à au moins un bord d'une paire de bords d'attaque et de fuite jumelée avec une paire de bords d'attaque et de fuite définissant le long de l'axe de la piste deux distances prédéterminées, chacune d'entre elles étant comprise entre deux multiples consécutifs du pas d'inscription des données.

L'invention a également pour objet un dispositif optique de suivi de piste mettant en œuvre un tel support d'information.

L'invention sera mieux comprise au moyen de la description ci-après et des figures annexées parmi lesquelles :

La figure 1 est une vue isométrique d'un support d'information comportant une prégravure et des organes essentiels d'un dispositif monospot permettant l'inscription et la lecture optique de données utiles dans des zones réservées d'une piste à suivre.

La figure 2 représente une structure de prégravure de type connu ainsi que les signaux de lecture associés.

La figure 3 est une figure explicative.

La figure 4 représente un premier exemple de structure de prégravure selon l'invention.

La figure 5 représente un second exemple de structure de prégravure selon l'invention.

Les figures 6 à 9 représentent d'autres exemples de structure de prégravure selon l'invention.

La figure 10 est le schéma électrique d'un dispositif permettant la lecture des supports d'information réalisés conformément à l'invention.

La figure 11 représente une autre variante de prégravure selon l'invention.

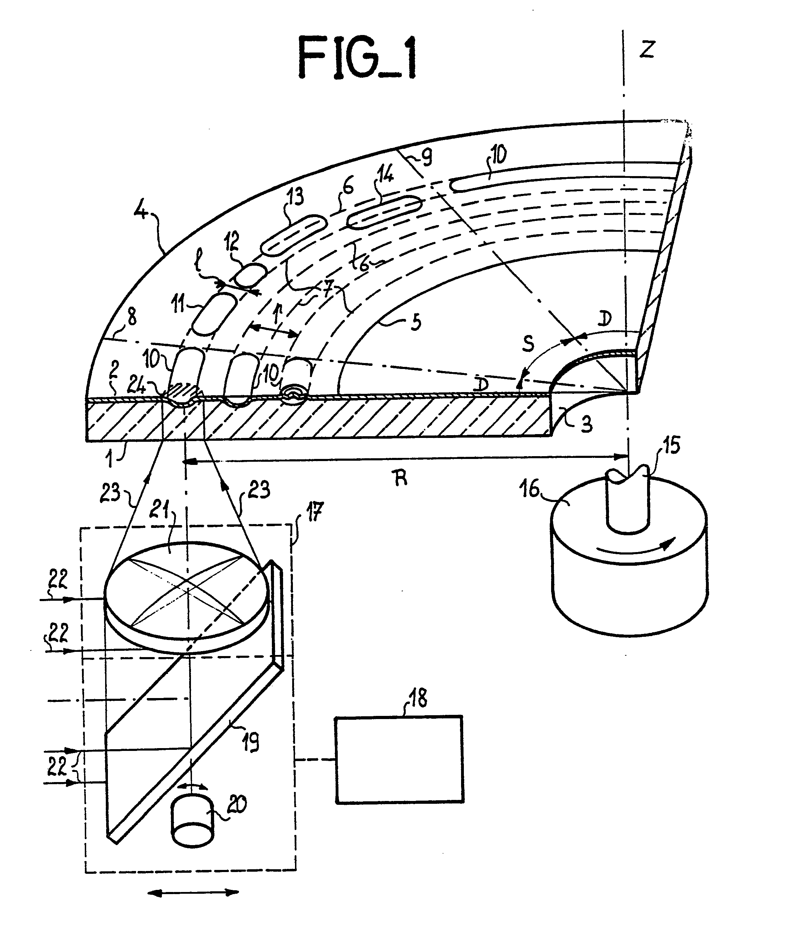

Sur la figure 1, on peut voir un support d'information, par exemple en forme de disque, comprenant un porte-couche 1 perméable au rayonnement optique et une structure photosensible 2 dont l'interaction avec un rayonnement optique inscripteur permet de transcrire des données incidentes. A titre d'exemple non limitatif, la face supérieure du porte-couche 1 comporte une gravure en creux formée de micro-cuvettes 10, 11, 12, 13, 14 qui matérialisent un relief de prégravure. Ce relief est recouvert par une structure photosensible 2 qui en épouse la forme et qui comprend le dépôt d'une sous-couche de matière organique thermodégradable et un revêtement métallique mince. Ce revêtement peut résister à l'échauffement produit par l'impact d'un faisceau optique inscripteur, mais il se déforme localement à partir d'un certain seuil de puissance optique pour donner naissance à une bulle représentative de l'information qui a servi à moduler le faisceau optique inscripteur. L'invention n'est pas limitée au cas des structures photosensibles à bulles, mais concerne aussi d'autres structures photosensibles connues, notamment celles où l'impact d'un faisceau optique engendre une ablation, la rupture d'un composé diazotype, un changement d'état physique ou la création d'une image latente. Chaque micro-cuvette ou chaque bulle constitue un motif prégravé ou postgravé. Ce motif se démarque dans la face sensible du support d'information par un contour fermé et l'ensemble des motifs réalise le compartimentage bidimensionnel de cette face. La plage annulaire réservée à l'emmagasinage des données est généralement comprise entre la périphérie 4 du support d'information et une circonférence intérieure 5. Elle est subdivisée en tronçons de piste présentant une largeur radiale l et un pas p. Chaque tronçon de piste sur la figure 1 est compris entre deux lignes pointillées 6 et 7 qui sont les spires de deux spirales imbriquées dont le centre est en principe situé sur l'axe de rotation Z. Le centrage du support d'information est assuré par un trou de centrage 3 dont l'alésage en principe centré par rapport aux spirales correspond à une portée aménagée sur la broche rotative 15 du moteur d'entraînement 16. Une autre subdivision de la plage annulaire 4,5 est assurée selon un ensemble de rayons 8 et 9 qui définissent en alternance des secteurs angulaires D et S. Les secteurs angulaires D sont affectés à l'emmagasinage des données utiles, tandis que les secteurs angulaires S sont réservés à des motifs de prégravure permettant, notamment, de mettre en évidence un écart de suivi optique de piste. Il doit être entendu que la structure du support d'information illustrée sur la figure 1 comporte en réalité un très grand nombre d'éléments de piste et un très grand nombre de secteurs. On a exagéré sur la figure 1 l'importance des secteurs S, car c'est sur le détail de leur agencement que porte l'invention. Il est également utile de préciser que la forme en cuvette des motifs 10 à 14 de même que l'expression « prégravure » ne limite en aucune façon le domaine de l'invention.

On peut en effet considérer des motifs dépourvus de relief, mais se démarquant de l'environnement par une différence de densité optique ou par un changement de pouvoir réflecteur optique. L'avantage de la prégravure en creux ou en saillie se situe au niveau de la fabrication du support d'information. En effet, le porte-couche 1 est une copie en relief d'une matrice confectionnée selon la technique de l'insolation d'un photorésist. Un flan en verre garni d'une couche de résine photosensible est placé dans une machine d'enregistrement qui met en œuvre, pour l'insolation, un faisceau laser modulé en intensité et convenablement focalisé. Le faisceau laser produit une tache lumineuse généralement circulaire à laquelle on fait décrire une trajectoire, par exemple en spirale. En modulant l'intensité du faisceau laser, on définit les futurs motifs centrés tels que 10, 11, 12. Pour définir les futurs motifs excentrés 13 et 14, on déporte le point d'impact du faisceau laser, par exemple au moyen d'un déviateur acoustooptique afin de créer dans la trajectoire en spirale un décalage radial transitoire d'ampleur prédéterminée. Etant donné le mode d'insolation par impulsion, chaque motif de prégravure épouse la forme d'un trait plus ou moins allongé ayant un bord d'attaque et un bord de fuite qui rappellent par leur forme celle du spot ayant servi à les obtenir.

Sur la figure 1 sont également représentés d'autres organes essentiels d'un dispositif d'enregistrement et de lecture optique qui utilise le support d'information prégravé. Outre le moteur d'entraînement 16, on voit que pour inscrire des données utiles, il est nécessaire de prévoir une tête optique 17 capable de projeter un spot lumineux 24 susceptible d'éclairer un élément de piste situé à une distance R variable de l'axe de rotation Z. A cet effet, on peut prévoir que la tête optique 17 reçoit un rayonnement collimaté 22 émis par une source laser fixe qui est renvoyé par un miroir pivotant 19 vers un objectif 21. Le faisceau 23 focalisé par l'objectif 21 éclaire la structure photosensible 2 à travers le porte-couche 1 et donne naissance au spot 24 qui peut se déplacer d'un élément de piste au suivant sous la commande du moteur 20. Un déplacement plus important du spot 24 peut être réalisé par un déplacement de la tête optique 17 au moyen du moteur 18.

L'interaction optique du faisceau 23 avec les motifs portés par le support d'information fait que la lumière qui émerge de la portion de structure 2 éclairée par le spot 24 renferme des caractéristiques particulières qui signalent la présence du motif, sa localisation par rapport au spot et le cas échéant le fait qu'il a été postgravé pour stocker des données utiles. La coupe frontale du support d'information montre le relief du motif 10 situé sur trois éléments de piste successifs. Les deux motifs de gauche reflètent la prégravure seule et on voit que la structure photosensible 2 épouse intimement les creux du porte-couche 1. Le motif de droite a été postgravé, ce qui se traduit par exemple par un décollement de la structure photosensible 2 avec formation de bulle. Il n'est généralement pas prévu de postgraver les secteurs S. Les secteurs D peuvent le cas échéant ne comporter aucune prégravure.

Les motifs de prégravure 11, 12, 13 et 14 situés dans les secteurs S jouent un rôle important pour repérer dans l'espace les éléments de piste et les interpistes qui les séparent, mais aussi pour repérer dans le temps les différents stades d'exploration du support d'information par le spot 24. Les motifs 13 et 14 représentés sur la figure 1 sont plus particulièrement destinés à mettre en évidence les écarts de suivi, tandis que les motifs 11 et 12 servent au recalage de la base de temps.

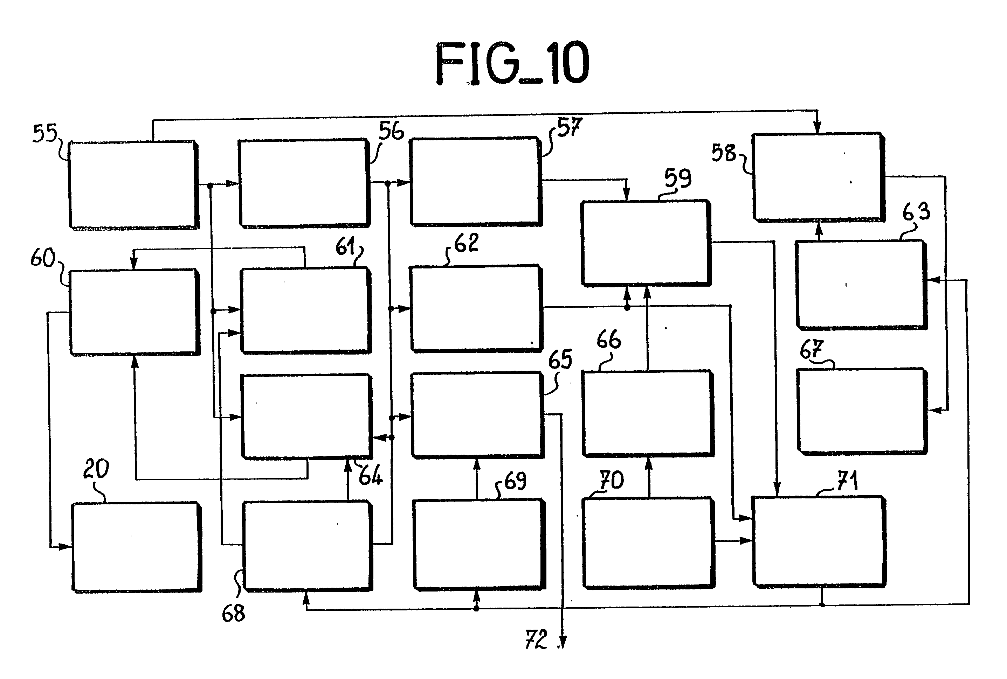

Sur la figure 1, les moyens photodétecteurs qui captent la lumière qui a interagi avec le support d'information ne sont pas représentés, mais ils sont généralement disposés de façon à recueillir le rayonnement renvoyé à travers l'objectif 21 par le support d'information. Dans le schéma de la figure 10, ces moyens portent la référence 55.

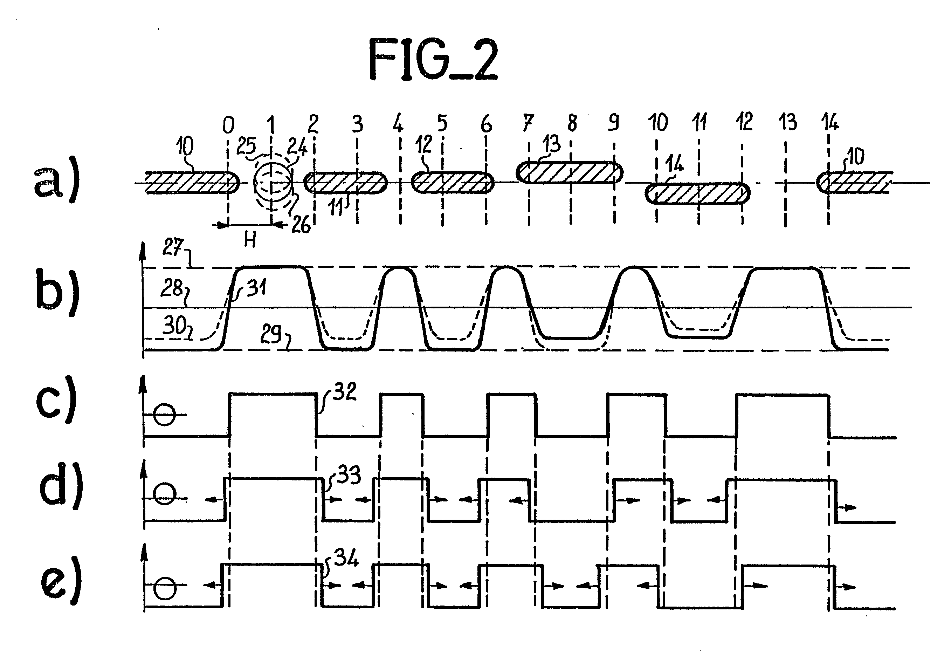

Sur la figure 2, on a illustré une structure de prégravure de type connu et les différents signaux électriques qui sont issus de l'interaction optique de cette structure avec un spot 24 supposé centré sur l'axe longitudinal de la piste et ensuite décentré vers le haut ou vers le bas selon les contours 25 et 26.

En (a) sur la figure 2, on a gradué l'axe de la piste avec un pas H au moyen de traits verticaux pointillés numérotés de 0 à 14. Cette plage graduée représente l'étendue d'un secteur S encadré par deux secteurs D qui comprennent chacun un motif de prégravure continu 10. Dans la plage graduée, on a prévu un espace de garde suivi d'un premier motif centré 11 qui occupe une graduation et demi et d'un second motif centré identique 12 décalé vers la droite de deux graduations et demi. Ces deux motifs 11 et 12 constituent une marque de phase codée qu'un filtre approprié peut reconnaître sans réagir à des données numériques présentes sur le support d'information avec le pas d'écriture H. Dans la plage graduée, on a ensuite prévu deux autres motifs 13 et 14 qui sont excentrés en sens contraires par rapport à l'axe de la piste. Le motif 13 décalé vers le haut s'étend entre les graduations 7 et 9 tandis que le motif 14 décalé vers le bas s'étend entre les graduations 10 et 12. Les motifs représentés en (a) sur la figure 2 sont hachurés pour marquer le fait qu'ils sont analysés par les moyens photodétecteurs, comme paraissant moins réflecteurs que leur environnement lisse.

Le diagramme représenté en (b) sur la figure 2 indique comment évolue le signal de lecture délivré par les moyens photodétecteurs. L'amplitude du signal est portée en ordonnée avec un niveau bas 29 et un niveau haut 27. La courbe 31 en trait plein représente la lecture de la structure de prégravure par un spot centré 24. On note que dans la région où le spot interagit avec les motifs 13 et 14, le signal de lecture présente un creux moins profond, mais le même pour les deux motifs excentrés. La courbe 30 en trait pointillé représente l'évolution du signal de lecture avec un spot excentré illustré en (a) avec le contour 25. On voit que l'interaction avec les motifs 10, 11 et 12 conduit à des creux moins profonds et que les creux correspondant aux interactions avec les motifs 13 et 14 se sont déplacés en sens contraires. Cette dernière remarque montre qu'en échantillonnant le signal de lecture aux graduations 8 et 11 et en soustrayant les échantillons, on obtient une mesure de l'excentrement du spot par rapport à l'axe de la piste avec indication du signe de l'excentrement.

Le signal de lecture représenté en (b) sur la figure 2 ne comporte pas de transitions brusques, aussi est-il remis en forme avant d'être exploité pour en extraire l'information utile. Cette remise en forme consiste à créer un signal rectangulaire dont les transitions se produisent aux intersections du signal de lecture avec un seuil de décision représenté par le niveau 28.

On a représenté en (c) sur la figure 2 le signal 32 remis en forme lors d'une exploration avec spot centré. En (d), le signal 33 remis en forme correspond à une exploration avec spot décentré vers le haut conformément au contour 25 et en (e), le signal 34 remis en forme correspond à une exploration avec spot décentré vers le bas conformément au contour 26.

Comme le signal remis en forme sert au recalage de la base de temps du dispositif d'enregistrement-lecture, il faut que l'écart de suivi du spot ait sur la position des transitions la même influence quel que soit le signe de l'écart.

Sur la figure 2, on a représenté en (d) et (e) les décalages provenant des écarts de suivi de piste. Des flèches horizontales marquent la tendance du système de lecture à détecter plus tôt ou plus tard les bords d'attaque et de fuite des motifs 11 à 14. Lorsqu'on considère les décalages de transitions de même sens, on voit que les marques de phase 11 et 12 sont détectées avec un écart entre ces transitions sensiblement invariant par rapport à l'écart de suivi du spot. Il n'en va pas de même lorsqu'on considère la détection des marques de suivi 13 et 14.

On arrive ainsi à la constatation que la structure de prégravure de la figure 2 donne satisfaction du fait que les bords d'attaque et de fuite des deux marques de phase 11 et 12 sont seules utilisées pour le recalage de base de temps, alors que la seule partie utile des marques de suivi 13 et 14 est constituée par la disposition excentrée de leurs flancs. Cependant cette solution est grosse consommatrice d'espace puisqu'elle met en œuvre quatre marques espacées et des espaces de garde avec les secteurs de données voisins.

A la lumière de ce qui précède, l'invention propose un compactage de la structure de prégravure qui consiste à mettre en œuvre au moins deux motifs dont l'un au moins présente une portion excentrée associée à au moins un bord d'une paire de bords d'attaque et de fuite jumelée avec une paire de bords d'attaque et de fuite définissant le long de l'axe de la piste deux distances prédéterminées, chacune d'entre elles étant comprise entre deux multiples consécutifs du pas d'inscription des données.

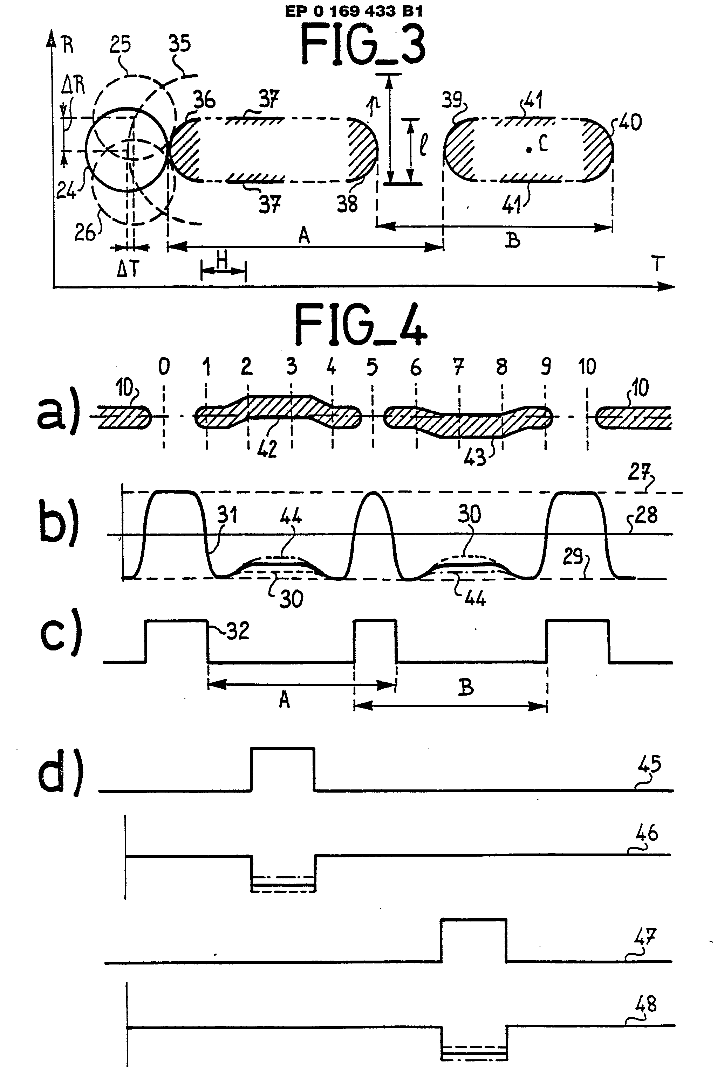

Sur la figure 3, on peut voir une ébauche de représentation qui permet de bien dégager le concept inventif. Dans un système d'axes T, R qui définit le plan de la face du support d'information et où l'axe de la piste est dirigé suivant T, on a représenté les constituants essentiels de deux motifs de prégravure sans s'attacher spécialement à leurs contours réels. Pour ce qui est de mettre en évidence un écart de suivi ΔR du spot 24, c'est le positionnement des flancs 37 et 41 selon R qui va avoir de l'importance. Par contre pour définir un bon recalage de base de temps, ce sont les bords d'attaque 36 et 39 ainsi que les bords de fuite 38 et 40 qui doivent être judicieusement positionnés.

L'interaction du spot avec le bord d'attaque 36 est illustré sur la figure 3 en faisant tangenter avec ce bord le contour 24, 25 ou 26 du spot de lecture lorsqu'il aborde le motif de gauche. La courbe 35 est le lieu géométrique du centre du spot à l'instant du début de l'interaction et elle permet de mettre en évidence l'erreur de calage ΔT qui résulte de l'excentrement du spot ΔR. Pour que la structure de prégravure illustrée sur la figure 3 soit reconnaissable et séparable des données utiles inscrites avec le pas prédéterminé H, on définit deux distances A et B à l'aide de deux bords d'attaque et de deux bords de fuite qui vérifient la condition que chacune d'elles est comprise entre deux multiples contigus du pas H, on a donc :

$$kH < A < (k + 1) H$$
$$mH < B < (m + 1) H$$

avec k ou m entiers quelconques.

Typiquement, on choisit une distance demi entière pour exprimer les distances A et B en fonction de H.

Sur la figure 3, on a représenté entre les bords 39 et 40 le centre C du motif, car par raison de symétrie, c'est l'instant où le centre du spot et le centre C ont la même abscisse qui donne l'indication la plus sûre pour un recalage de base de temps. Cet instant se déduit par interpolation linéaire des instants qui correspondent au franchissement par le spot des bords 39 et 40 délimitant le motif de centre C. Ainsi, on peut s'affranchir des défauts relatifs à la défocalisation du spot et à la réalisation de la prégravure, de plus l'erreur de calage ΔT est compensée.

Sans s'écarter du domaine de l'invention, on peut également définir les distances A et B non pas entre des bords de même espèce comme illustré sur la figure 3, mais par exemple entre les bords 36 et 40 d'une part et entre les bords 38 et 39 d'autre part. Ce dernier mode de jumelage des bords est plus sensible aux défauts de prégravure et de focalisation, mais il se prête à une réalisation particulièrement compacte de la prégravure comme on le verra par la suite.

Ayant donné en général les caractéristiques de la structure de prégravure selon l'invention, on peut passer aux différents modes de réalisation qui entrent dans le cadre de la présente invention. Sur la figure 4, on peut voir en (a) un premier exemple de structure de prégravure selon l'invention. Elle se situe entre les graduations 0 à 10 et se compose de deux motifs 42 et 43 qui comportent chacun une partie centrale excentrée et deux parties terminales centrées. La partie (b) de la figure 4 représente l'allure du signal de lecture en adoptant les mêmes références que sur la figure 2. La courbe 44 en trait mixte a été rajoutée pour illustrer le signal de lecture correspondant à un spot excentré selon le contour 26 de la figure 2. La courbe 32 visible en (c) sur la figure 4 représente le signal remis en forme avec l'indication des distances A et B demi-entières par rapport à la graduation visible en (a). La distance A est le décalage des deux bords d'attaque des motifs 42 et 43, tandis que la distance B est le décalage des bords de fuites. La différence entre les motifs 42 et 43 réside dans le sens de l'excentrement de la partie centrale. Dans la partie (d) de la figure 4, on a représenté le signal 45 définissant la fenêtre d'échantillonnage du signal de lecture pour le premier motif 42 et le signal 47 définissant la fenêtre d'échantillonnage du second motif 43.

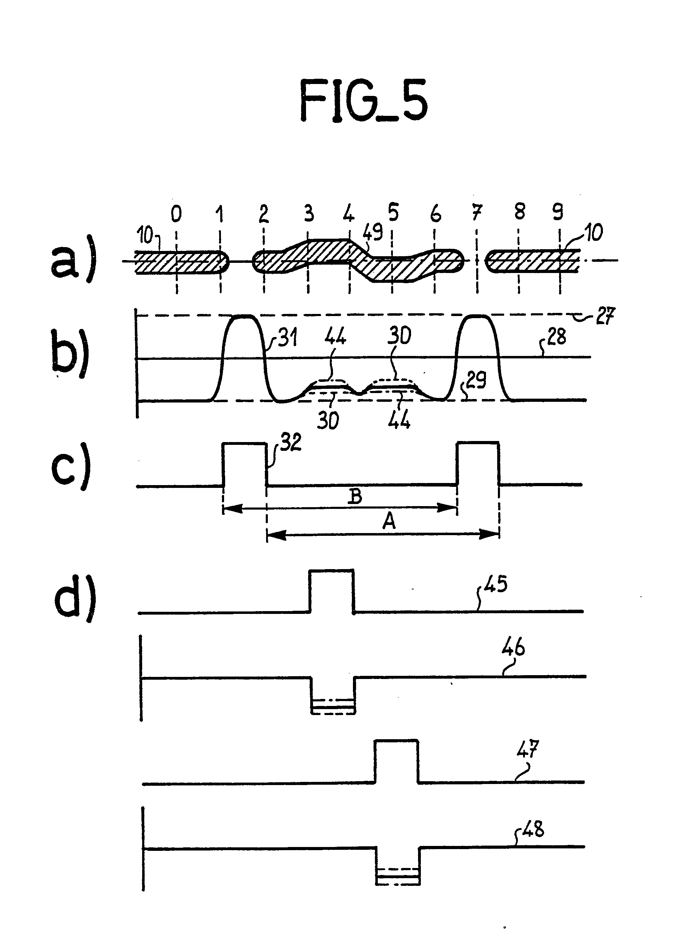

Les signaux 46 et 48 représentent les échantillons prélevés avec trois hauteurs qui correspondent aux trois cas envisagés dans la partie (b) de la figure 4. Les signaux 45 et 47 sont délivrés par des circuits synchronisés sur la base de temps du dispositif enregistreur lecteur, laquelle est recalée au moyen des transitions du signal 32. On peut encore réaliser la structure de prégravure de façon plus compacte en adoptant la configuration illustrée en (a) sur la figure 5. On constate que cette structure associe à un motif central 49, deux motifs d'encadrement qui peuvent consister en des prolongements du sillon de prégravure 10 où les données utiles sont postgravées. Le motif central 49 comporte deux parties excentrées en sens contraires et deux parties extrême centrées. Les motifs d'encadrement qui s'étendent en amont de la graduation 1 et en aval de la graduation 7 sont nécessaires pour définir à l'extrême gauche un bord de fuite et à l'extrême droite un bord d'attaque. Ces deux bords sont jumelés avec les bords de même espèce du motif central 49. Les distances A et B sont indiquées en (c) sur la figure 5. Les parties (b) à (d) de la figure 5 s'analysent comme leurs homologues de la figure 4. La partie oblique centrale du motif 49 est facultative, mais peut subsister sans inconvénient.

A titre d'exemple numérique, une configuration de prégravure structurée comme indiqué à la figure 5 peut être basée sur une période d'horloge de 200 nanosecondes. La figure 5 comme les autres figures est sujette à deux interprétations, car elle traduit un lien entre une disposition géométrique et la représentation des signaux électriques résultant de cette disposition. Ce lien découle bien entendu de la vitesse d'exploration v de la piste. Une longueur telle que le pas H de la graduation illustrée en (a) a pour homologue dans le temps une durée qui est la période d'horloge. Dans le cas présent, avec une vitesse d'exploration de 8,25 m/sec assurée avec un rayon de lecture de 0,0705 m et une vitesse de rotation d'environ 1 120 t/min, on voit qu'une période d'horloge de 200 nanosecondes correspond à une longueur par élément binaire de 1,65 micron ce qui porte la longueur hors tout du secteur S de la figure 5 à 1,65 × 9 microns, soit 14,85 microns. Ce secteur S peut voisiner avec des blocs D comportant chacun 91 périodes d'horloge, soit une longueur par bloc de 150,15 microns.

Typiquement, le pas p des pistes est pris égal à 1,7 micron, avec une largeur de piste I égale à 0,6 micron. Ce dimensionnement de piste convient lorsque le diamètre du spot explorateur à mi-hauteur est pris égal à un micron. L'excentrement des parties du motif 49 comprises sur la figure 5 entre les graduations 3 et 4 et à cheval sur la graduation 5 est de ± 0,3 microns. Cet excentrement représente la distance entre l'axe déporté passant par le milieu de la largeur d'une partie excentrée et l'axe longitudinal de la piste. Typiquement, la largeur du motif 49 est constante et égale à la largeur de piste I.

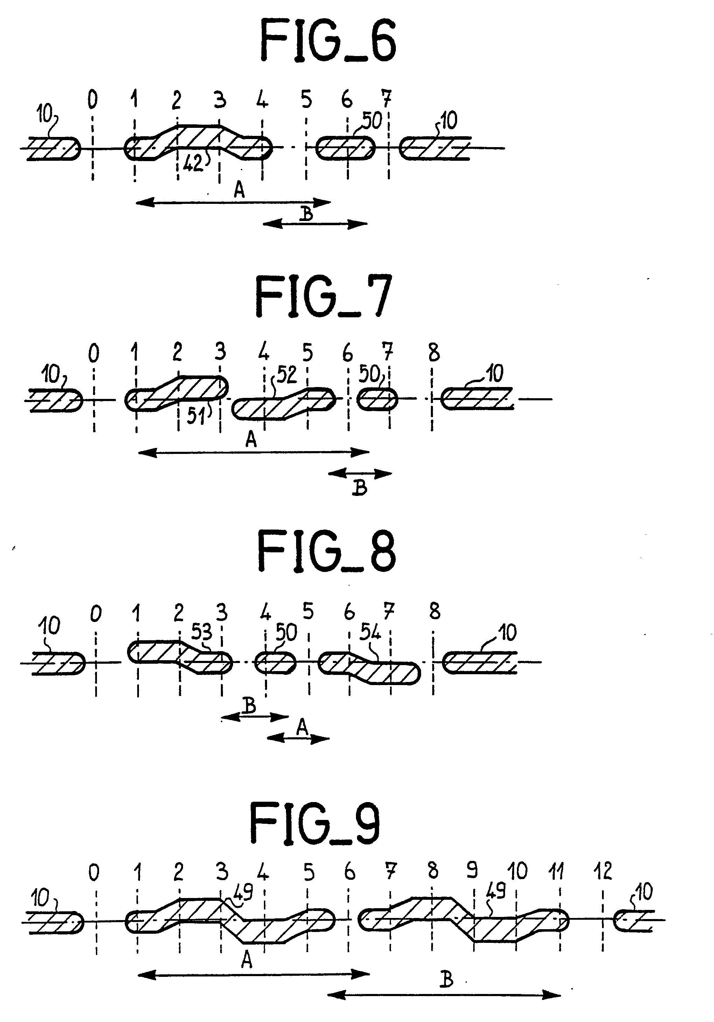

Parmi les autres configurations possibles, on a illustré sur la figure 6 une structure de prégravure qui est dérivée de la configuration de la figure 4 en substituant au motif 43 un motif 50 totalement dépourvu de partie excentrée. De ce fait, il faut prévoir sur le support d'information qu'un secteur D de données soit encadré par deux secteurs S du type représenté sur la figure 6 en changeant alternativement le sens de l'excentrement de la partie décentrée du motif 42. En effet l'évaluation d'un écart de suivi du spot nécessite la prise en compte de deux échantillons qui seront prélevés tour à tour dans deux structures de prégravure successives. Dans le cas de la figure 6, il n'est pas nécessaire que le sillon de prégravure 10 participe par ses prolongements à la définition des marques de phase, mais on peut bien entendu omettre la marque 50 et faire jouer ce rôle de marque de phase aux prolongements du sillon 10 vers la marque 42.

Il est également possible comme illustré sur la figure 7, de choisir une configuration de structure de prégravure à trois motifs. Celle-ci dérive de la configuration de la figure 6 où le motif 42 est remplacé par deux motifs 51 et 52 qui ont chacun une partie excentrée et une partie centrée.

Le système de la figure 7 fournit deux échantillons de marques de suivi comme les configurations des figures 4 et 5 et on peut lui appliquer la remarque faite à propos de la figure 6 concernant la possibilité de substituer au motif 50 des prolongements d'un sillon de prégravure 10.

La configuration à trois motifs est une variante de la configuration de la figure 7, où le motif centré 50 est encadré par des motifs 53 et 54 qui ressemblent aux motifs 51 et 52 mais qui sont disposés autrement pour obtenir des distances A et B égales et relativement petites. Ici également on peut remplacer le motif 50 par des prolongements de sillons 10.

La configuration de la figure 9 permet de disposer de quatre échantillons de suivi de piste en répétant le motif 49 illustré à la figure 5. Grâce au redoublement du motif 49, il n'est pas nécessaire de faire appel aux prolongements du sillon 10 pour définir les distances A et B.

Sur la figure 10, on peut voir à titre d'exemple non limitatif, le circuit électrique d'un dispositif de transcription d'information adapté à l'exploitation de la structure de prégravure selon l'invention.

Ce circuit comporte les moyens photodétecteurs 55 qui délivrent le signal de lecture représenté en (b) sur les figures 4 et 5. Ce signal de lecture est appliqué à l'entrée du circuit de remise en forme 56 et aux entrées de deux circuits d'échantillonnage 61 et 64 qui conservent la valeur échantillonnée jusqu'à la prochaine commande d'échantillonnage. Les sorties des circuits 61 et 64 sont reliées aux entrées d'un circuit comparateur 60 qui délivre un signal d'écart de suivi de piste avec lequel on commande le moteur 20 qui oriente le miroir 19. Les circuits d'échantillonnage 61 et 64 sont commandés par un circuit générateur de fenêtres d'échantillonnage 68 qui produit des signaux tels qu'illustrés en (d) sur les figures 4 et 5 avec les références 45 et 47. La référence de temps nécessaire au repérage des fenêtres d'échantillonnage est fournie au générateur 68 par un circuit de base de temps 71.

Le circuit 71 est alimenté par une horloge 70 qui fournit la cadence H d'exploration des données utiles qui, au recalage près, correspond à la graduation adoptée en (a) sur les figures 4 et 5.

Le circuit 71 reçoit aussi un signal de recalage provenant d'un circuit d'interpolation 59. C'est la détection des marques de phase qui détermine le fonctionnement du circuit d'interpolation 59. A cet effet, le signal remis en forme délivré par le circuit 56 est appliqué à deux circuits sélecteurs de transitions 57 et 62.

Le circuit sélecteur 57 a pour fonction d'isoler la transition qui, sur les figures 3 à 9, marque le début de la seconde marque de phase et le circuit sélecteur 62 se charge d'isoler la transition qui marque la fin de cette marque.

Pour réaliser cette sélection, chaque circuit sélecteur 57 ou 62 comporte un générateur de fenêtre d'échantillonnage qui prend pour référence de temps n'importe quelle transition du signal remis en forme ayant le signe approprié. La fenêtre d'échantillonnage est produite pour prélever la transition distante de A ou B de la transition initiatrice. Comme il faut que la transition sélectionnée soit effectivement l'une de celles qui délimitent la seconde marque de phase, il est nécessaire, soit de ménager un espace mort suffisant en amont des marques de phase, soit de situer le bord d'attaque de la première marque de phase en concordance avec la graduation qui gère la distribution des données, soit de n'admettre à l'entrée des circuits sélecteurs 57 ou 62 que des transitions en rapport avec l'exploration des marques de phase.

Le circuit interpolateur 59 interprète les instants de détection définis par les transitions issues des circuits 57 et 62 d'après un découpage du cycle de l'horloge 70 fourni par un circuit multiplicateur de fréquence 66 relié à celle-ci. Les dates affectées à ces instants servent de données numériques pour accéder à une table d'interpolation qui fixe l'erreur de calage de base de temps en prenant pour repère la coïncidence du centre du spot avec le milieu C de la seconde marque de phase. Cette erreur est utilisée par le circuit de base de temps pour un recalage intervenant à chaque exploration d'un jeu de marques de phase. La prise en compte de l'erreur de calage est ordonnée par exemple par la transition sélectionnée par le circuit 62. La base de temps 71 permet de synchroniser le cheminement des données utiles dans une mémoire tampon 65 dont la commande est assurée par un générateur de rythme 69.

Les données entrent dans la mémoire tampon 65 après remise en forme par le circuit 56. Elles sont disponibles à la sortie 72.

La base de temps 71 assure aussi la commande d'un générateur de fenêtre d'échantillonnage 63 qui sélectionne avec un circuit 58 un ou plusieurs échantillons du signal de mesure de l'erreur de focalisation du faisceau de lecture. Ce signal est fourni par les moyens photodétecteurs 55. Le prélèvement des échantillons du signal indicateur de défocalisation peut avoir lieu dans une zone de support d'information vierge de prégravure ou dans des zones prégravées telles qu'une zone centrée ou deux zones décentrées en sens contraires. Le circuit 58 commande le moteur 67 qui assure la focalisation du faisceau optique.

Dans la description qui précède, on a décrit des structures de prégravure compactes qui mettent en œuvre des motifs sinueux ou en forme de marche d'escalier. Cependant, moyennant une bonne maîtrise des caractéristiques dimensionnelles de la prégravure, on peut viser une compacité encore plus grande.

On a vu à la figure 2, que les transitions du signal de lecture remis en forme subissent des décalages liés à l'écart de suivi du spot par rapport à l'axe de la piste. En comparant les courbes (d) et (e), on voit que la distance qui sépare les transitions de même sens correspondant à l'exploration des bords d'attaque des motifs 13 et 14, change lorsque le spot s'écarte de l'axe de la piste. Par contre, si l'on s'intéresse à un couple de transitions de sens contraires qui correspondent à l'exploration d'un bord d'attaque de l'un des motifs 13 ou 14 et à celle d'un bord de fuite de l'autre de ces motifs, on constate que l'interdistance ainsi définie est invariante par rapport à l'erreur du suivi de piste. Il est donc possible de réduire encore l'encombrement de la structure de prégravure.

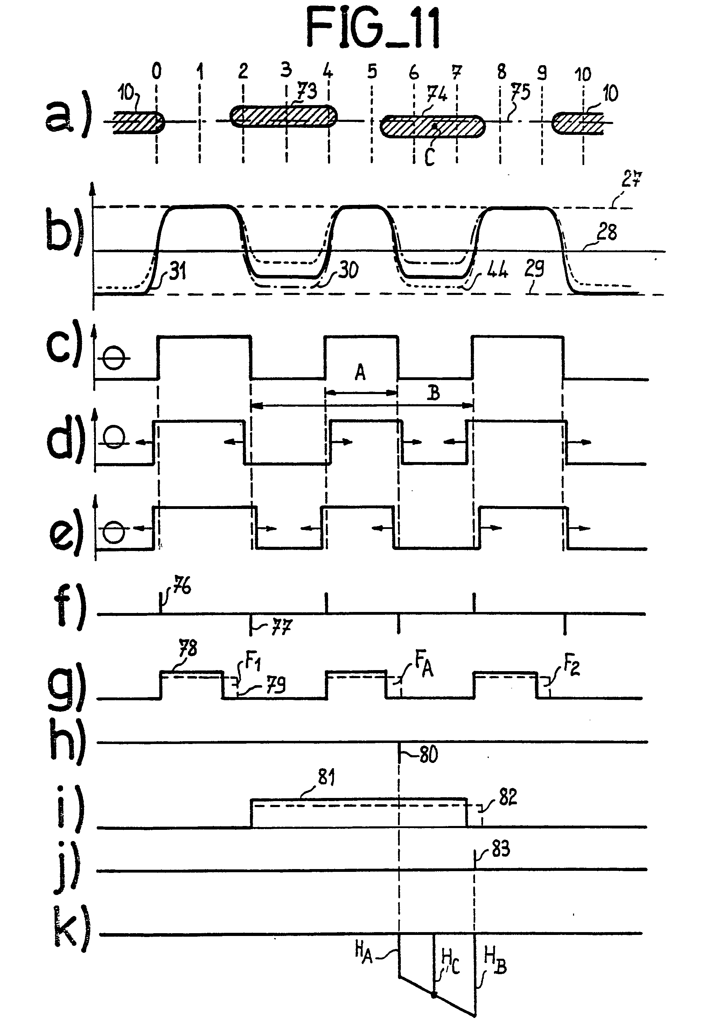

Sur la figure 11, on a représenté en (a) une structure de prégravure composée de deux motifs décentrés 73 et 74 dont les bords d'attaque et de fuite sont jumelés de façon particulière de façon à permettre un recalage de base de temps.

Le bord d'attaque du motif 73 débute à la graduation 2 et est jumelé avec le bord de fuite du motif 74 de façon à déterminer une distance B demi-entière représentée en (c) sur la figure 11. Le bord de fuite du motif 73 est jumelé avec le bord d'attaque du motif 74 pour déterminer une autre distance demi-entière A.

Comparée à la structure de la figure 2, on voit que la structure de la figure 11 permet de supprimer entièrement les marques de phase centrées 11 et 12 et qu'elle situe les marques 73 et 74 qui servent à détecter les écarts de suivi du spot par rapport à l'axe de piste 75, de façon à pouvoir utiliser les transitions de signes contraires qu'elles produisent pour recaler la base de temps. On notera qu'aux figures 4 à 9 ce sont des transitions de mêmes signes engendrées par des bords de motifs centrés qui définissent les distances A et B.

Les parties (b), (c), (d) et (e) de la figure 11 ne nécessitent pas de commentaire particulier, les mêmes références désignant les mêmes éléments qu'aux figures précédentes.

Comme exposé précédemment, il s'agit de déterminer l'écart $\Delta c$ de calage de base de temps en estimant l'instant où le centre C de la marque 74 et le centre du spot de lecture sont confondus.

A cet effet, on a représenté en (f) sur la figure 11 des impulsions 76 et 77 qui correspondent respectivement aux transitions positives et négatives du signal remis en forme illustré en (c).

Pour échantillonner la transition négative produite lorsque le spot aborde le motif 74, il faut générer une fenêtre d'échantillonnage exclusivement centrée sur cette transition qui apparaît à la distance A de la fin d'exploration du motif 73.

A titre d'exemple de réalisation, non limitatif, le premier circuit sélecteur de transition 57 (Fig. 10) comporte un compteur incrémenté par des impulsions issues du circuit multiplicateur de fréquence 66.

La remise à zéro de ce compteur intervient lorsque le temps écoulé est légèrement supérieur à la durée qui correspond au parcours de la distance A.

Le compteur commence son comptage lorsqu'il reçoit une impulsion 76 et un circuit logique associé au compteur forme une fenêtre d'échantillonnage entre une valeur légèrement inférieure à la durée qui correspond à A et la remise à zéro. Ce fonctionnement est illustré en (g) sur la figure 11 où le créneau 78 symbolise l'incrémentation jusqu'à A $-\varepsilon$ et le créneau 79 l'incrémentation

jusqu'à A + ε. L'écart ε est la demi-largeur de la fenêtre d'échantillonnage et on voit en (g) que plusieurs fenêtres $F_1$, $F_A$, $F_2$ sont ainsi engendrées par des impulsions 76. La fenêtre $F_A$ est celle qui permet de prélever l'impulsion négative 80 comme illustré en (h) sur la figure 11. Cette impulsion est fournie au circuit d'interpolation 59 qui détermine une date $H_A$ comme illustré en (k) sur la figure 11.

Ayant daté l'abord du motif 74, il faut dater aussi la fin d'exploration de ce motif. Ceci est réalisé au niveau du second circuit sélecteur 62 qui comporte un compteur qui réagit aux impulsions négatives 77 pour définir une autre fenêtre d'échantillonnage. On voit en (i) sur la figure 11 les créneaux 81 et 82 qui représentent B — ε et B + ε et on voit en (j) l'impulsion 83 sélectionnée qui détermine au niveau du circuit interpolateur 59 une seconde date $H_B$ représentée en (k) sur la figure 11. Par interpolation linéaire ou à l'aide d'une table de valeurs à deux entrées, le circuit interpolateur 59 détermine la date $H_c$ représentée en (k) sur la figure 11 et finalement l'erreur de temps Δc qui permet le recalage de la base de temps.

Dans la description qui précède on a vu comment il est possible de s'affranchir de l'imprécision de synchronisation due au décalage du spot par rapport à l'axe longitudinal de la piste. Il s'agit de jumeler les bords d'attaque et de fuite de deux motifs de façon à définir deux distances caractéristiques invariantes par rapport au décalage du spot. Lorsque le jumelage est basé sur un premier repérage par les deux bords d'attaque et sur un second repérage par les deux bords de fuite, ces bords doivent être centrés et dans ce cas les motifs sont partiellement excentrés pour permettre aussi la détection de l'écart de suivi de piste. Lorsque le jumelage est basé sur un repérage par un bord d'attaque et un bord de fuite, ces bords sont excentrés en sens contraires de sorte que la détection de l'écart de suivi de piste et le recalage de base de temps peuvent être assurés avec des motifs totalement excentrés. L'utilisation de motifs sinueux présente l'avantage de rendre plus faible l'imprécision de synchronisation due à des imperfections de la prégravure des motifs. L'utilisation de motifs exclusivement décentrés permet d'atteindre une plus grande compacité, mais exige en contrepartie une meilleure maîtrise du dimensionnement de la prégravure. De toute façon, les solutions décrites dans le cadre de la présente invention sont nettement plus favorables que celles qui préconisent que les marques de suivi de piste soient précédées par un ou plusieurs motifs précurseurs pour commander directement l'échantillonnage de ces marques.

L'invention s'applique à tout système de couche enregistrable. Il y a lieu de noter que la prégravure peut comporter dans les zones réservées à la transcription des données utiles des parties qui coopèrent à la détermination des marques de phase et dont les prolongements forment en quelque sorte un motif à l'envers puisque son bord de fuite précède son bord d'attaque. La postgravure résultant de la transcription des données utiles peut être telle qu'elle produit une réflectivité accrue du support d'information. Il en résulte que le signal remis en forme ne contient pas de transition due aux données utiles et que l'on peut remettre en forme ces données avec un seuil de décision de valeur supérieure à celui qui sert à la remise en forme du signal de lecture de prégravure. Ce cas se produit notamment lorsque les secteurs de données sont équipés d'un sillon continu de prégravure et lorsque la couche enregistrable est une couche à bulles dont le décollement assure le renforcement de réflectivité.

## Revendications

1. Support d'information inscriptible optiquement selon une piste (6, 7) jalonnée par des zones (S) de prégravure qui alternent avec des zones (D) réservées à l'inscription des données utiles, chacune desdites zones de prégravure comportant au moins deux motifs (13, 14) ayant des bords d'attaque et de fuite, lesdits motifs permettant par leur exploration optique successive au moyen d'un spot de lecture (24) de détecter l'erreur de suivi de piste par interaction avec au moins une partie de motif décentrée par rapport à l'axe longitudinal de ladite piste et un signal de calage de base de temps résultant de l'interaction du spot avec au moins deux bords d'attaque et deux bords de fuite, caractérisé en ce que l'un au moins desdits motifs présente ladite partie de motif décentrée (37, 41) associée à au moins un bord d'une paire de bords d'attaque et de fuite (36, 38) jumelée avec une paire de bords d'attaque et de fuite (39, 40) définissant le long de l'axe de la piste deux distances (A, B) prédéterminées, chacune d'entre elles étant comprise entre deux multiples consécutifs du pas (H) d'inscription des données.

2. Support d'information selon la revendication 1, caractérisé en ce que l'une desdites distances (A, B) représente l'écartement desdits bords d'attaque (36, 39), lesdits bords (36, 38, 39, 40) étant centrés sur ledit axe.

3. Support d'information selon la revendication 1, caractérisé en ce que l'une desdites distances (A, B) représente l'écartement d'un bord d'attaque (36, 39) et d'un bord de fuite (38, 40) ; lesdits motifs (73, 74) étant entièrement excentrés symétriquement par rapport audit axe.

4. Support d'information selon la revendication 2, caractérisé en ce que lesdits motifs (42, 43, 49, 51, 52, 53, 54) ont chacun une partie excentrée.

5. Support d'information selon l'une quelconque des revendications 2 et 4 caractérisé en ce que l'un desdits motifs (50, 10) est entièrement centré par rapport audit axe.

6. Support d'information selon la revendication 5, caractérisé en ce que ledit motif centré est un prolongement d'un motif (10) appartenant aux secteurs (D) d'encadrement du secteur (S) où se situe ladite zone de prégravure.

7. Support d'information selon la revendication 2, caractérisé en ce que deux motifs successifs (42, 43, 51, 52, 53, 54) comportent des parties décentrées symétriquement par rapport audit axe.

8. Support d'information selon la revendication 2, caractérisé en ce qu'un même motif (49) comporte deux parties décentrées symétriquement par rapport audit axe.

9. Support d'information selon la revendication 8, caractérisé en ce qu'il comporte deux motifs (49) ayant chacun deux parties décentrées symétriquement par rapport audit axe.

10. Support d'information selon l'une quelconque des revendications 5 et 6, caractérisé en ce que ledit motif centré (50) est associé à deux autres motifs ayant un bord centré et une partie décentrée.

11. Support d'information selon l'une quelconque des revendications 1 et 2 et 4 à 10, caractérisé en ce que l'un au moins des motifs est de forme sinueuse.

12. Dispositif optique de suivi de piste destiné à la mise en œuvre d'un support d'information selon l'une quelconque des revendications 1, 2 et 4 à 10, du type comprenant des moyens d'échantillonnage des bords de motifs et de parties excentrées de ceux-ci, caractérisé en ce que les transitions de signal de lecture remis en forme, déterminantes par rapport auxdites distances prédéterminées (A, B), sont des transitions de mêmes sens.

13. Dispositif optique de suivi de piste destiné à la mise en œuvre d'un support d'information selon la revendication 3, du type comprenant des moyens d'échantillonnage des bords de motifs et des parties excentrées de ceux-ci, caractérisé en ce que les transitions du signal de lecture remis en forme, déterminantes par rapport auxdites distances prédéterminées (A, B) sont des transitions de sens opposés.

14. Dispositif optique selon l'une quelconque des revendications 12 et 13, caractérisé en ce que les moyens d'échantillonnage comportent des moyens de comptage fournissant un encadrement des transitions qui caractérisent les bords d'un motif et des moyens interpolateurs permettant de dater la coïncidence du centre du spot de lecture avec le milieu (C) du motif.

## Claims

1. A carrier adapted to optically record data along a track (6, 7), which is marked with pre-engraved zones (5) alternating with areas (D) for recording useful information, each of said pre-engraved zones comprising at least two patterns (13, 14) having leading borders and trailing borders, said patterns allowing to detect track following errors when being scanned optically one after the other by means of a reader spot (24), which interacts with at least one portion of the pattern offset in relation to a longitudinal axis of said track and with a time base setting signal resulting from the interaction of the spot with at least two leading borders and two trailing borders, characterized in that at least one of said patterns has said offset portion of the pattern (37, 41) associated with at least one border of a pair of leading and trailing borders (36, 38) geminated with one pair of leading and trailing borders (39, 40), which borders define along the track axis two predetermined distances (A, B), each of which is comprised within the limits of two consecutive multiples of the information recording pitch (H).

2. An information carrier according to claim 1, characterized in that one of said distances (A, B) represents the spacing of said leading borders (36, 39), said borders (36, 38, 39, 40) being centered on said axis.

3. An information carrier according to claim 1, characterized in that one of said distances (A, B) represents the spacing of one leading border (36, 39) and one trailing border (38, 40), said patterns (73, 74) being entirely and symmetrically offset in relation to said axis.

4. An information carrier according to claim 2, characterized in that said patterns (42, 43, 49, 51, 52, 53, 54) each have an offset portion.

5. An information carrier according to claim 2 or 4, characterized in that one of said patterns (50, 10) is entirely centered relative to said axis.

6. An information carrier according to claim 5, characterized in that said centered pattern is an extension of a pattern (10) belonging to the framing areas (D) of the one section (S) wherein said pre-engraved area is located.

7. An information carrier according to claim 2, characterized in that two consecutive patterns (42, 43, 51, 52, 53, 54) comprise symmetrically offset portions in relation to said axis.

8. An information carrier according to claim 2, characterized in that a same pattern (49) comprises two symmetrically offset portions relative to said axis.

9. An information carrier according to claim 8, characterized in that it comprises two patterns (49), each having two symmetrically offset portions relative to said axis.

10. An information carrier according to claim 5 or 6, characterized in that said centered pattern (50) is associated with two other patterns having a centered border and an offset border.

11. An information carrier according to any one of claims 1 and 2 and 4 through 10, characterized in that at least one of the patterns has a sinusoidal shape.

12. An optical track following device intended for operating the information carrier according to any one of claims 1, 2 and 4 through 10, comprising means for sampling the borders of the patterns and their offset portions, characterized in that the transitions of the re-shaped recording signal, which determine said predetermined distances (A, B), are transitions having the same directions.

13. An optical track following device intended for operating the information carrier according to claim 3, comprising means for sampling the borders of the patterns and their offset portions, characterized in that the transitions of the re-shaped recording signal, which determine said predetermined distances (A, B), are transitions having opposite directions.

14. An optical device according to claim 12 or 13, characterized in that the sampling means comprise counting means adapted to deliver a framing for the transitions, which characterizes the borders of a pattern, and interpolation means permitting to date the coincidence of the center of the recording spot and the center (C) of the pattern.

**Patentansprüche**

1. Optisch aufzeichnungsfähiger Informationsträger zur optischen Aufzeichnung entlang einer Spur (6, 7), die durch vorgravierte Zonen (S), welche mit für die Aufzeichnung von Nutzinformationen reservierten Zonen (D) abwechseln, unterteilt ist, wobei jede der vorgravierten Zonen mindestens zwei Muster (13, 14) mit Vorder- und Hinterkante aufweist und die Muster bei ihrer nacheinander erfolgenden optischen Abtastung durch einen punktförmigen Lesestrahl (24) die Erfassung des Spurverfolgungsfehlers ermöglichen, indem sie mit mindestens einem gegen die Längsachse der Spur versetzten Abschnitt des Musters und einem die Zeitbasis einstellenden Signal zusammenwirken, das aus der Wechselwirkung des Lesestrahls mit mindestens zwei Vorder- und zwei Hinterkanten hervorgeht, dadurch gekennzeichnet, daß mindestens eines der Muster den versetzten Abschnitt des Musters (37, 41) in Zuordnung zu mindesten einem Rand eines Paares von Vorder- und Hinterkanten (36, 38), die mit einem Paar von Vorder- und Hinterkanten (39, 40) unter Definierung zweiter vorbestimmter Abstände (A, B) entlang der Spurachse gepaart sind, aufweist, wobei beide Abstände in den Grenzen zweier aufeinanderfolgender Vielfache des Teilungsschrittes (H) der Informationsaufzeichnung liegen.

2. Aufzeichnungsträger nach Anspruch 1, dadurch gekennzeichnet, daß einer der Abstände (A, B) dem Abstand zwischen den Vorderkanten (36, 39) entspricht, und die Kanten (36, 38, 39, 40) auf die Spurachse zentriert sind.

3. Aufzeichnungsträger nach Anspruch 1, dadurch gekennzeichnet, daß einer der Abstände (A, B) dem Abstand zwischen einer Vorderkante (36, 39) und einer Hinterkante (38, 40) entspricht, wobei die Muster (73, 74) vollständig und symmetrisch gegen die Spurachse versetzt sind.

4. Aufzeichnungsträger nach Anspruch 2, dadurch gekennzeichnet, daß die Muster (42, 43, 49, 51, 52, 53, 54) jeweils einen versetzten Abschnitt aufweisen.

5. Aufzeichnungsträger nach einem der Ansprüche 2 und 4, dadurch gekennzeichnet, daß eines der Muster (50, 10) vollständig in der Spurachse liegt.

6. Aufzeichnungsträger nach Anspruch 5, dadurch gekennzeichnet, daß das in der Spurachse liegende Muster eine Verlängerung eines zu den Umgrenzungssektoren (D) des Sektors (S) gehörenden Musters (10) bildet.

7. Informationsträger nach Anspruch 2, dadurch gekennzeichnet, daß zwei aufeinanderfolgende Muster (42, 43, 51, 52, 53, 54) symmetrisch gegen die Spurachse versetzte Bereiche aufweisen.

8. Informationsträger nach Anspruch 2, dadurch gekennzeichnet, daß ein einzelnes Muster (49) zwei symmetrisch gegen die Spurachse versetzte Abschnitte aufweist.

9. Informationsträger nach Anspruch 8, dadurch gekennzeichnet, daß er zwei Muster (49) aufweist, die beide je zwei symmetrisch gegen die Spurachse versetzte Abschnitte besitzen.

10. Informationsträger nach einem der Ansprüche 5 oder 6, dadurch gekennzeichnet, daß das auf die Spurachse zentrierte Muster (50) zwei anderen Mustern zugeordnet ist, die eine auf die Spurachse zentrierte Kante und einen gegen die Spurachse versetzten Abschnitt aufweisen.

11. Aufzeichnungsträger nach einem der Ansprüche 1 bis 2 und 4 bis 10, dadurch gekennzeichnet, daß mindestens eines der Muster wellig ist.

12. Optische Spurverfolgungsvorrichtung für den Einsatz eines Informationsträgers nach einem der Ansprüche 1, 2 und 4 bis 10, mit Mitteln zum Abtasten der Kanten der Muster und der gegen die Spurachse versetzten Abschnitte derselben, dadurch gekennzeichnet, daß die Übergänge des wieder in Form gebrachten Lesesignals, die für die vorbestimmten Abstände (A, B) bestimmend sind, Übergänge in der gleichen Richtung sind.

13. Optische Spurverfolgungsvorrichtung für den Einsatz eines Informationsträgers nach Anspruche 3, mit Mitteln zum Abtasten der Kanten der Muster und der gegen die Spurachse versetzten Abschnitte derselben, dadurch gekennzeichnet, daß die Übergänge des wieder in Form gebrachten Aufzeichnungssignals, die in Bezug auf die vorbestimmten Abstände (A, B) bestimmend sind, Übergänge in entgegengesetzter Richtung sind.

14. Optische Vorrichtung nach Anspruch 12 oder 13, dadurch gekennzeichnet, daß die Abtastmittel Zählmittel, die eine Umgrenzung derjenigen Übergänge liefern, welche die Kanten eines Musters kennzeichnen, und Interpolationsmittel aufweisen, welche das Zusammentreffen der Mitte des punktförmigen Lesestrahls mit der Mitte (C) des Musters zeitlich fixieren.

# FIG_1

FIG_2

# FIG_3

# FIG_4

# FIG_5

# FIG_6

# FIG_7

# FIG_8

# FIG_9

FIG_10

# FIG_11